Europäisches Patentamt

European Patent Office

Office européen des brevets

(19)

(11) Numéro de publication: **0 172 122**
**B1**

(12) **FASCICULE DE BREVET EUROPÉEN**

(45) Date de publication du fascicule du brevet:
21.09.88

(51) Int. Cl.⁴: **B 27 N 3/00,** C 08 L 97/02

(21) Numéro de dépôt: **85420142.3**

(22) Date de dépôt: **25.07.85**

(54) **Procédé de production de produits décoratifs à partir de fragments ou morceaux de bois et produits obtenus.**

(30) Priorité: **27.07.84 FR 8412174**

(43) Date de publication de la demande:
**19.02.86 Bulletin 86/8**

(45) Mention de la délivrance du brevet:
**21.09.88 Bulletin 88/38**

(84) Etats contractants désignés:
**AT BE CH DE GB IT LI LU NL SE**

(56) Documents cité:
**FR-A-2 102 721**
**FR-A-2 245 495**
**US-A-2 993 014**
**US-A-3 981 840**

(73) Titulaire: **BOXY INDUSTRIES, Société Anonyme :,
F-26300 Châteauneuf sur Isère (FR)**

(72) Inventeur: **Ostermann, Michel Ernest, F-26300
Chateauneuf Sur Isère (FR)**
Inventeur: **Meriaux, Etienne, 9, rue des Réservoirs,
F-26500 Bourg Les Valence (FR)**

(74) Mandataire: **Ropital- Bonvarlet, Claude, Cabinet
BEAU DE LOMENIE 99, Grande rue de la
Guillotière, F-69007 Lyon (FR)**

# 0 172 122

## Description

La présente invention concerne le domaine de la production de produits à caractère décoratif pouvant être utilisés en feuilles, en bandes, en panneaux, en blocs, notamment pour la décoration de locaux d'utilisation ou d'habitation.

Bien que non spécialement limitée à cette application, l'invention vise, plus particulièrement, la récupération et l'utilisation de fragments ou morceaux de bois brut ou usiné, provenant des exploitations forestières ou des industries de transformation-usinage du bois brut.

Une proposition de récupération et d'utilisation de tels produits à de telles fins a déjà été préconisée, notamment par le brevet français 71-38 306 (2 113 222).

Dans ce brevet français, il est envisagé la possibilité de réaliser un panneau décoratif en plaçant, dans un moule, des branches ou brindilles noyées dans une masse d'une matière plastique, indifféremment à caractère thermo-durcissable ou thermo-plastique. L'enseignement à caractère très général fourni par un tel document ne peut être considéré comme apportant les éléments d'informations nécessaires et suffisants à l'homme de métier pour mettre en oeuvre une telle technique.

En effet, la mise en oeuvre des moyens préconisés conduit à l'obtention d'un produit fini ne pouvant être commercialisé en raison des défauts qu'il présente.

Le premier est l'inclusion dans la matière plastique de bulles de tailles différentes qui détruisent l'aspect esthétique du produit et nuisent, également, à ses caractéristiques mécaniques.

Le second tient au fait que le tranchage à partir d'un bloc moulé, pour obtenir par exemple des plaques, fait apparaître que les déchets ou chutes de bois sont, en partie au moins, imprégnés à l'intérieur de leurs canaux par la résine. Le contraste de couleurs et l'aspect esthétique dûs à l'essence et au veinage des produits inclus s'en trouvent fortement altérés de façon définitive.

Un troisième défaut tient au fait que, dans leur quasi ensemble, les matières plastiques préconisées possèdent un coefficient de retrait important lors de la phase de durcissement. Ce retrait contraint les déchets ou chutes au point de les détériorer en provoquant leur déchirement, leur éclatement et/ou leur fragmentation. Ce retrait est aussi responsable de contraintes internes produisant une déformation notable du produit fini qui nécessite alors, le plus souvent, une opération d'usinage importante pour lui conférer un aspect extérieur convenable. Ces contraintes internes sont aussi responsables de fentes, plans de clivage, etc ... dans la masse de matière plastique durcie et, parfois, d'une rupture de liaison entre la résine et les morceaux inclus.

L'objet de l'invention est, justement, de fournir les moyens techniques nécessaires et suffisants pour permettre de produire, à partir de fragments et/ou de morceaux de bois et d'une matière plastique appropriée, des produits décoratifs, à caractère esthétique certain, exempts de défauts et déformations et pouvant être obtenus en limitant, par ailleurs, la consommation ou l'utilisation de la quantité de matière plastique.

Pour atteindre l'objectif ci-dessus, le procédé de production selon l'invention est caractérisé en ce qu'on utilise:
- une résine époxy liquide et polymérisant à température ambiante en présence d'un réactif de polymérisation ayant un caractère le moins réactif à la même température,
- des fragments et/ou morceaux de bois préalablement chauffés à une température homogène supérieure à la température de crête d'exothermie de polymérisation du mélange résine-réactif.

L'invention a, également, pour objet, tout produit décoratif obtenu à partir du procédé ci-dessus.

Le procédé selon l'invention consiste à réaliser un produit décoratif, de toute forme appropriée, en utilisant des fragments et/ou morceaux de bois placés dans un moule et noyés ou submergés dans une masse de matière plastique contenue dans un tel moule. Par fragments et/ou morceaux, il faut entendre à la fois les chutes, les déchets et/ou les pièces de bois brutes et/ou usinées. Le rapport du volume occupé par les fragments et/ou morceaux par rapport à celui du moule peut être variable. Dans certains cas, les fragments et/ou morceaux peuvent être disposés pour être placés en proche proximité, sinon en contact partiel, par leur surface périphérique.

Les fragments et/ou morceaux peuvent être de formes différentes et être placés sans aucun sens préférentiel ou, au contraire, en étant alignés selon une direction privilégiée pour des raisons esthétiques ou mécaniques spécifiques.

Selon l'invention, on utilise, en tant que matière plastique, une matière thermo-durcissable à température ambiante et, dans cette famille, une résine époxy fluide à température ambiante et dont le processus de polymérisation intervient en présence d'un ou de plusieurs catalyseurs ou d'un ou de plusieurs durcisseurs. Selon l'invention, le durcisseur est également choisi pour posséder un caractère le moins réactif possible à température ambiante.

Une telle matière première est connue pour produire, lors de la phase de polymérisation, une réaction exothermique élevant sa température dans des conditions dépendant de la masse de matière plastique, de la conformation du volume qu'elle occupe et de la surface d'échange existant.

Une telle élévation de température est naturellement appliquée aussi aux matières incluses. Cette température a pour effet de dilater les gaz inclus à ces matières et de provoquer leur évacuation dans le milieu environnant constitué par la résine. Cette réaction exothermique est responsable de la présence de bulles incluses et des tensions internes, ainsi, d'ailleurs, que de l'absorption par les fibres d'une partie au moins de la résine tachant ou altérant l'aspect esthétique des produits inclus.

2

Afin d'éliminer cet inconvénient, l'invention préconise de mettre en oeuvre une résine liquide à température ambiante et susceptible de polymériser, également à températurre ambiante, dès qu'elle est mise en présence de son ou de ses réactifs de polymérisation. A cette fin, une résine époxy et un durcisseur, commercialisés sous la marque RBS par la Société T2L CHIMIE, conviennent parfaitement.

Selon une autre disposition de l'invention, on utilise des fragments et/ou morceaux de bois possédant une température homogène qui est au moins égale et, de préférence, supérieure à la température de crête de l'exothermie de polymérisation. De cette façon, lors de la submersion des fragments et/ou morceaux dans la résine, le gaz inclus ne sont soumis à aucune dilatation et restent confinés dans les cellules qu'ils occupent par la pression périphérique exercée par la résine.

De façon pratique, selon une forme de réalisation preférée de l'invention, on limite l'exothermie de polymérisation par ventilation naturelle ou forcée, de façon à réduire aussi la température de préchauffage des fragments et/ou morceaux. Comme l'exothermie de polymérisation peut atteindre des crêtes relativement élevées, par exemple de 80 à 150°C, un refroidissement contrôlé permet de limiter la températurre des bois à une valeur suffisamment basse pour éviter leur détérioration éventuelle et de réduire aussi la dépense de d'énergie de refroidissement. Cette phase de maintien en température est conduite, par exemple, dans une plage comprise entre -10 et +20°C. Selon le procédé, le préchauffage du bois est effectué alors jusqu'à une température homogène, au moins égale, mais de préférence supérieure, à celle de maintien contrôlé en température qui est conduit en plaçant le moule garni dans une chambre, dans une enceinte ou dans un local permettant d'entretenir un refroidissement apte à absorber les calories produites par l'exothermie de polymérisation, afin que cette polymérisation puisse s'engager et se dérouler sans que les fragments ou morceaux aient à subir une température supérieure à la leur initiale.

De la sorte, le ou les gaz inclus aux matières ne sont pas soumis à une dilatation responsable de l'inclusion de bulles à l'intérieur de la matière plastique.

L'absence d'évacuation des gaz inclus permet de limiter également la déshydratation des fragments ou morceaux et de supprimer, de cette façon, les contraintes internes.

Avantageusement, il est prévu de maintenir l'ensemble moule-résine-bois pendant une première phase de polymérisation, à une température constante pour atteindre l'état de gélification ou de prédurcissement de la matière plastique. Dans un second temps, selon le procédé de l'invention, on soumet l'ensemble moule-résine-déchets à une température légèrement supérieure pour favoriser la seconde phase de polymérisation conduisant à l'état de durcissement final.

De cette façon, en mettant en oeuvre le procédé selon l'invention, il devient possible d'obtenir et de produire des produits décoratifs de toutes formes souhaitées, exempts de bulles incluses dans la résine et n'ayant subi aucune contrainte ou tension interne susceptible d'altérer l'aspect esthétique des fragments et/ou morceaux et de fendre ou déformer la masse de résine les incluant.

L'absence de transfert et d'évacuation des gaz inclus permet d'isoler les différents canaux ou cellules et d'éviter ainsi la pénétration de la résine. Ceci a deux conséquences positives. La première est l'absence de taches apparentes dans les sections des fragments et/ou morceaux lorsque, par exemple, un bloc, produit selon le procédé, est ensuite tranché ou découpé en plaques.

La seconde réside dans le fait que la production d'un bloc ou produit décoratif n'implique que le seul remplissage du volume du moule réservé à la matière plastique et limite ainsi l'utilisation ou la consommation d'un produit de base dont le coût est plus élevé que celui des fragments et/ou morceaux.

Il convient de noter que les fragments et/ou morceaux ne sont pas préalablement traités avant leur submersion. Ces fragments et/ou morceaux présentent, par conséquent, en surface, des aspérités, creux ou cellules ouvertes qui sont, en partie au moins, remplis de résine lors du remplissage du moule avec cette dernière à l'état fluide. La polymérisation qui résulte a pour effet de durcir ces inclusions et de réaliser, de la sorte, un ancrage parfait établissant une liaison intime entre la résine et les bois, sans que cette résine ait pu pénétrer profondément dans les cellules des couches sous-jacentes, au point d'altérer le caractère esthétique des produits inclus. Il en résulte une cohérence d'ensemble élevée, conférant au produit obtenu des bonnes caractéristiques de résistance mécanique, ainsi que des possibilités élevées d'usinage ou de surfaçage.

On donne ci-après différents exemples de mise en oeuvre de l'objet de l'invention.

**Exemple 1:**

| | |
|---|---|
| - Moule en matière stratifiée: dimensions | 200 x 200 x 30 |
| - Résine époxy RBS, durcisseur RBS | T2L CHIMIE |
| - Déchets de frêne, | |
| - Rapport résine-bois | 40/60 |
| - Chauffage préalable du bois | 35°C pendant 30 mn |
| - Epaisseur coulée | 25 mm |
| - Température de la résine versée | 20°C |
| - Température d'ambiance ventilée sur la pièce moulée limitée à | 10°C pendant 30 mn |
| - Température de fin de polymérisation limitée à | 40°C pendant 24 h |

Les phases de début et de fin de polymérisation sont conduites au moyen d'une installation de ventilation forcée dont le fonctionnement est placé sous la dépendance d'une sonde thermique appréciant plus particulièrement la température de la matière plastique.

Le bloc de produit nouveau obtenu peut être découpé en plaques ou panneaux présentant, après usinage de surface et polissage, un état de surface lisse, plan, faisant apparaître des sections de bois exemptes d'infiltration de résine, de contraintes ou fractures internes et intimement liées à l'enrobage de résine exempt lui-même de bulles, de contraintes ou de déformation.

**Exemple 2:**

| | |
|---|---|
| - Moule en tôle d'acier épaisseur 2 mm | 500 x 1 000 x 55 |
| - Résine RBS durcisseur RBS | T2L CHIMIE |
| - Déchets de chêne et de pin | 50 % chacun |
| - Chauffage initial du bois | 40°C pendant 30 mn |
| - Rapport résine-bois | 30/70 |
| - Epaisseur coulée dans le moule | 40 mm |
| - Température initiale résine | 20°C |
| - Phase 1: Température d'ambiance fortement ventilée | 0°C pendant 2 h |
| - Phase 2: Température d'ambiance ventilée | 10°C pendant 8 h |
| - Phase 3: Température de fin de polymérisation | 40°C pendant 24 h |

**Exemple 3:**

| | |
|---|---|
| - Moule en tôle d'acier épaisseur 2 mm | |
| | 500 x 500 x 55 |
| - Résine RBS durcisseur RBS | T2L CHIMIE |
| - Déchets de frêne, | |
| - Chauffage initial du bois | 100°C pendant 15 mn |
| - Rapport résine-bois | 30/70 |
| - Epaisseur coulée | 25 mm |
| - Température initiale résine | 0°C |
| - Phase 1: Température d'ambiance fortement ventilée | 25°C pendant 2 h |
| - Phase 2: Température de fin de polymérisation | 40°C pendant 24 h |

Parmi de nombreuses applications, il faut citer la mise en oeuvre du procédé pour l'obtention de plaques directement issues de moulage ou résultant d'un découpage et d'un polissage et utilisées pour former des panneaux de décoration de mur ou, encore, des plateaux de tables.

L'invention n'est pas limitée aux exemples décrits, car diverses modifications peuvent y être apportées sans sortir de son cadres defini par les revendications.

**Revendications**

1. Procédé de production de produits décoratifs à usages multiples, à partir de fragments et/ou morceaux de bois, dans lequel on place ces morceaux dans un moule, on submerge ces morceaux dans de la résine que l'on laisse durcir,
caractérisé en ce que:
- on utilise une résine époxy liquide et polymérisant à température ambiante en présence d'un agent durcisseur de polymérisation ayant un caractère le moins réactif à la même température,
- on utilise des fragments et/ou morceaux de bois préalablement chauffés et possédant une température homogène supérieure à la température de crête d'exothermie de polymérisation du mélange résine-agent durcisseur.

2. Procédé selon la revendication 1, caractérisé en ce qu'on limite par refroidissement la température de crête d'exothermie.

3. Procédé selon la revendication 2, caractérisé en ce qu'on limite la température de crête d'exothermie par paliers de températures croissantes.

4. Procédé selon la revendication 3, caractérisé en ce qu'on limite la température de crête d'exothermie à un premier palier compris entre -10°C et +20°C.

**0 172 122**

**Patentansprüche**

1. Verfahren zur Herstellung dekorativer Gegenstände für vielfache Zwecke aus Holzfragmenten und/oder -stücken, bei dem man diese Stücke in einer Form anordnet, man diese Stücke in Kunstharz untertaucht, das man erhärten läßt,
<u>dadurch gekennzeichnet,</u>
daß man ein flüssiges und bei Raumtemperatur in Gegenwart eines Polymerisationshärtungsmittels einer bei derselben Temperatur am wenigsten reaktiven Art polymerisierendes Epoxyharz verwendet, und
man Holzfragmente und/oder -stücke verwendet, die vorab erhitzt wurden und eine homogene Temperarur über der Höchstpolymerisationsexothermie-Temperatur des Harz-Härtungsmittel-Gemisches besitzen.

2. Verfahren nach dem Anspruch 1,
dadurch gekennzeichnet,
daß man die Höchstexothermietemperatur durch Abkühlen begrenzt.

3. Verfahren nah dem Anspruch 2,
dadurch gekennzeichnet,
daß man die Höchstexothermietemperatur durch Stufen wachsender Temperaturen begrentzt.

4. Verfahren nach dem Anspruch 3,
dadurch gekennzeichnet,
daß man die Höchstexothermietemperatur auf einer ersten Stufe im Bereich zwischen -10° und +20°C begrenzt.

**Claims**

1. Process for the production of multiple-use decorative products, from fragments and/or pieces of wood, in which said pieces are placed in a mold, and are immersed in resin which is left to set,
characterized in that said process consists:
- in using a liquid epoxy resin which is polymerizable at room temperature in the presence of a polymerization hardening agent having tha least reactive character at the same temperature,
- in using fragments and/or pieces of wood previously heated and having a homogeneous temperature higher than the peak temperature of exothermia of polymerization of the mixture of resin and hardening agent.

2. Process according to claim 1, characterized in that the peak temperature of exothermia is limited by cooling.

3. Process according to claim 2, characterized in that the peak temperature of exothermia is limited by stages of increasing temperatures.

4. Process according to claim 3, characterized in that the peak temperature of exothermia has a first stage ranging between -10°C and +20°C.